# EUROPÄISCHE PATENTSCHRIFT

(11) **EP 0 635 832 B1**
(45) Veröffentlichungstag und Bekanntmachung des Hinweises auf die Patenterteilung: **10.02.1999**
(21) Anmeldenummer: 94107703.4
(22) Anmeldetag: 18.05.1994
(51) Int. Cl.: G11B 23/023

(54) **Kassettenhalterung mit Klemmeinrichtung**
Cassette holding by means of pressure
Moyens de retenue à pression pour cassette

(30) Priorität: 20.07.1993 DE 4324266
(43) Veröffentlichungstag der Anmeldung: 25.01.1995
(73) Patentinhaber: fischerwerke Artur Fischer GmbH & Co. KG, D-72178 Waldachtal (DE)
(72) Erfinder: Torsten, Bieck Dipl.-Ing., D-72178 Waldachtal (DE)

(56) Entgegenhaltungen:
- EP-A- 0 490 094
- EP-A- 0 538 585
- EP-A- 0 573 789
- EP-A- 0 573 790
- WO-A-92/22899
- FR-A- 2 385 177

## Beschreibung

Die Erfindung betrifft eine Kassettenhalterung mit Klemmeinrichtung gemäß Oberbegriff des Anspruchs 1.

Zur Aufbewahrung von Magnetbandkassetten sind Behälter mit Kassettenhalterungen bekannt, bei denen die Magnetbandkassetten von einem Schieber gehalten werden, der gegen die Federkraft einer Feder in den Behälter einschiebbar und dort in einer Aufbewahrungsposition verriegelbar ist. Durch erneutes Antippen der Magnetbandkassette wird die Verriegelung gelöst, so daß die Feder den Schieber und die darauf gelagerte Magnetbandkassette nach vorne in eine Entnahmeposition schiebt. In der Entnahmeposition kann die Magnetbandkassette von Hand entnommen werden. Eine derartige Kassettenhalterung bzw. ein Behälter für die Aufbewahrung von Magnetbandkassetten ist aus der EP 0 538 585 A2 bekannt.

Soll eine derartige Kassettenhalterung beispielsweise in einem Kraftfahrzeug zum Einsatz kommen, so können die im Fahrbetrieb auftretenden Erschütterungen zu unerwünschten Rüttelgeräuschen führen. Aus diesem Grunde können Klemmeinrichtungen vorgesehen werden, die die in Aufbewahrungsposition befindlichen Magnetbandkassetten in der Kassettenhalterung festklemmen.

Der Erfindung liegt die Aufgabe zugrunde, eine Kassettenhalterung mit Klemmeinrichtung zu schaffen, bei der die Klemmeinrichtung von der ohnehin vorhandenen Feder für den Ausschub der Magnetbandkassetten betätigt wird.

Die Lösung dieser Aufgabe erhält man durch die im Anspruch 1 angegebenen Merkmale. Die Feder greift an einem am Schieber angebrachten Betätigungselement der Klemmeinrichtung an, so daß über dieses Betätigungselement in der Aufbewahrungsposition die Federkraft auf das Klemmelement der Klemmeinrichtung wirken kann. In der Entnahmeposition drückt die Feder nicht mehr gegen das Betätigungselement, so daß die Klemmung der Magnetbandkassette aufgehoben ist und diese bequem entnommen werden kann. Als Klemmelement wird vorzugsweise ein verschwenkbar am Schieber angeordneter Klemmkeil verwendet, der zusammen mit dem Schieber ein einstückiges Kunststoffteil bildet. Das Betätigungselement ist in diesem Fall eine Schubstange, die den Klemmkeil bei in Aufbewahrungsposition befindlichem Schieber seitlich gegen die eingelegte Magnetbandkassette drückt. Der Klemmkeil läßt sich auf diese Weise besonders einfach realisieren, wobei das Kunststoffmaterial eine ausreichende Elastizität hat, die einerseits eine Auslenkung des Klemmkeils und andererseits in der Entnahmeposition eine selbsttätige Rückstellung des Klemmkeils ermöglicht.

Besonders vorteilhaft ist es, als Feder eine Torsionsfeder zu verwenden, die sich mit einem Federarm rückseitig an der Kassettenhalterung abstützt, während der andere Federarm an dem Betätigungselement angreift. Dabei ragt der am Betätigungselement angreifende Federarm über dieses hinaus, so daß dessen freies Ende an der Rückseite des Schiebers zur Anlage kommt. Dadurch wird erreicht, daß in der Entnahmeposition zwar am Schieber noch eine von der Feder ausgehende Druckkraft auftritt, daß jedoch das Betätigungselement sich in einer neutralen Position ohne Einwirkung einer Federkraft befindet.

Die Erfindung wird nachfolgend anhand eines in der Zeichnung dargestellten Ausführungsbeispiels näher erläutert.

Es zeigen:
Figur 1 eine Kassettenhalterung, bei der sich der Schieber in Entnahmeposition befindet,
Figur 2 die Kassettenhalterung gemäß Figur 1, jedoch mit in Aufbewahrungsposition befindlichem Schieber, und
Figur 3 einen Behälter, in den sechs Kassettenhalterungen gemäß Figur 1 einsetzbar sind.

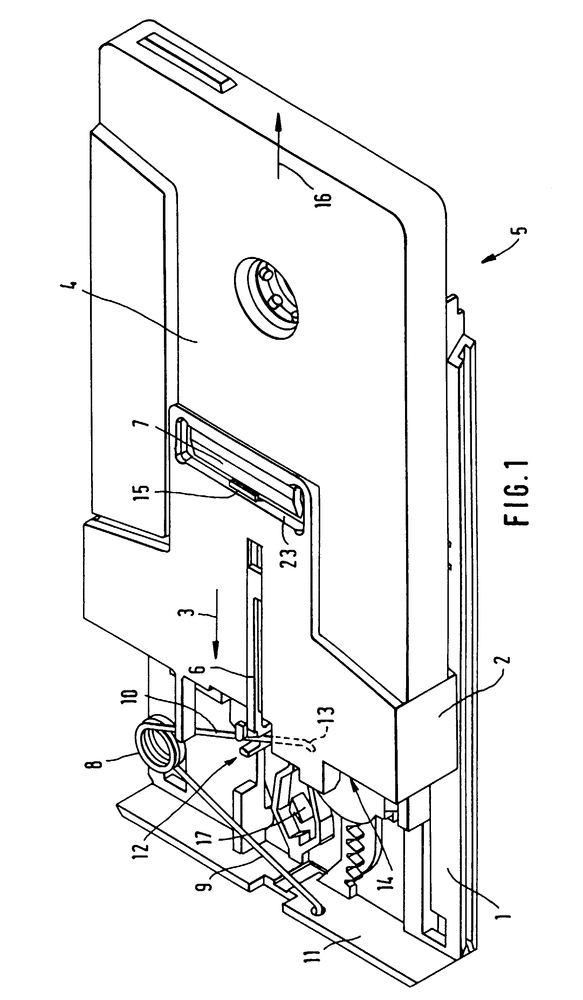

Die in Figur 1 dargestellte Kassettenhalterung besitzt eine Bodenplatte 1 und einen Schieber 2, der in Längsrichtung 3 verschiebbar ist. Der Schieber 2 befindet sich in der Entnahmeposition, bei der eine im Schieber 2 gehaltene Magnetbandkassette 4 an der Vorderseite 5 übersteht.

An dem Schieber 2 ist eine Klemmeinrichtung, bestehend aus einer Schubstange 6 und einem Klemmkeil 7, angeordnet. Die Schubstange bildet dabei das Betätigungselement der Klemmeinrichtung, während der Klemmkeil 7 das Klemmelement der Klemmeinrichtung darstellt. Am rückwärtigen Ende der Schubstange 6 greift eine als Torsionsfeder ausgebildete Feder 8 an. Rückseitig ist die Feder 8 mit einem ihrer beiden Federarme 9, 10 an einer Rückwand 11 befestigt, während der andere Federarm durch ein Aufnahmeteil 12 der Schubstange 6 hindurchgreift. Das freie Ende 13 des Federarms 10 liegt an der hier nicht sichtbaren Rückseite 14 des Schiebers 2 an.

In Figur 1 befindet sich die Schubstange 6 in einer neutralen Position, so daß ihr vorderes Ende 15 nicht mit dem Klemmkeil 7 in Berührung kommt. Der Klemmkeil 7 ist somit ebenfalls in neutraler Position, so daß die Magnetbandkassette 4 ungehindert aus dem Schieber 2 in Pfeilrichtung 16 entnommen oder in umgekehrter Richtung wieder eingeschoben werden kann.

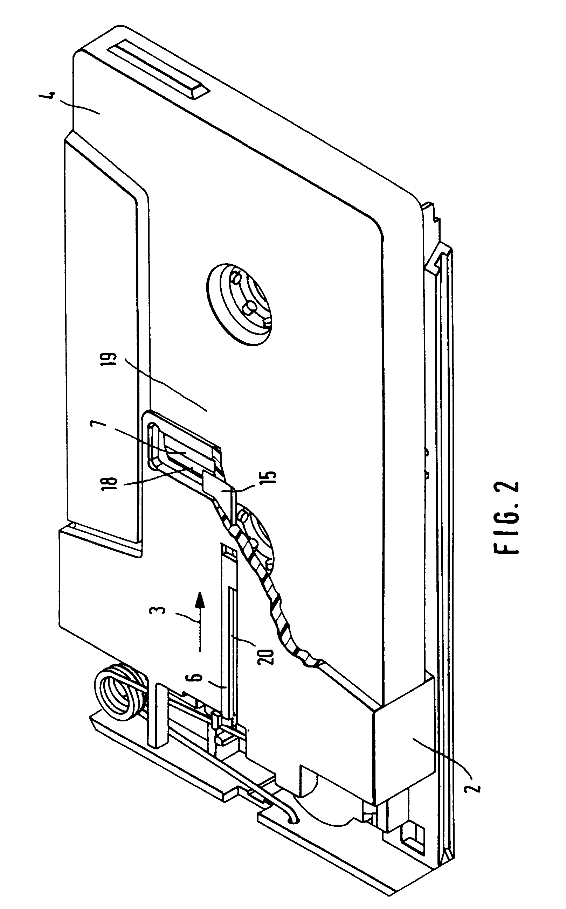

In Figur 2 befindet sich die Magnetbandkassette 4 und somit auch der Schieber 2 in der Aufbewahrungsposition. Der Schieber 2 ist in dieser Position in einer Rasteinrichtung 17 (Figur 1) eingerastet. Der Federarm 10 drückt in dieser Position die Schubstange 6 nach vorne gegen den Klemmkeil 7, der somit an seiner abgeschrägten Fläche 18 vom vorderen Ende 15 der Schubstange 6 gegen die Oberseite 19 der Magnetbandkassette 4 gedrückt wird. Die Schubstange 6 ist in einem Längskanal 20 des Schiebers 2 geführt. In Figur 2 ist ersichtlich, daß das an der Rückseite der Schubstange überstehende Aufnahmeteil 12 nur noch geringfügig an der Rückseite des Schiebers 2 übersteht.

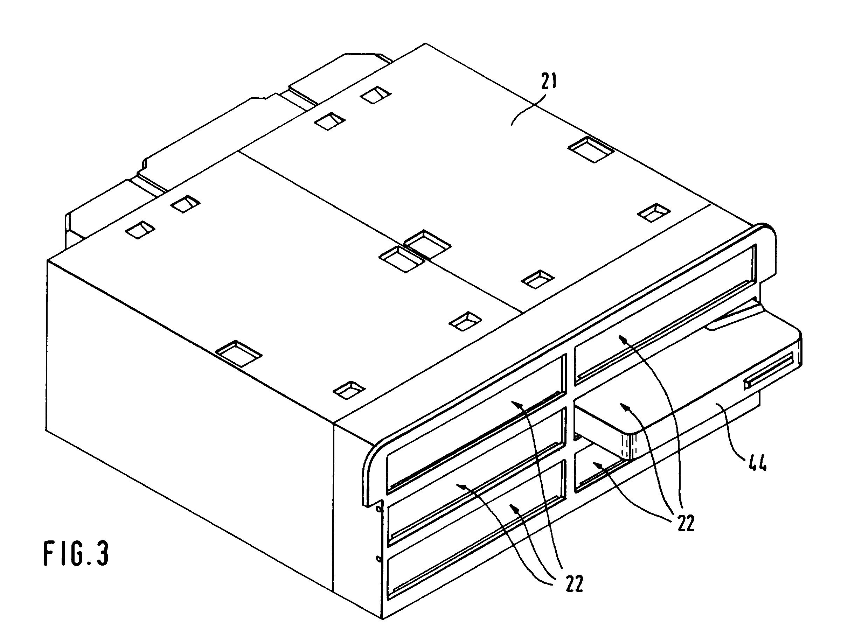

Die Kassettenhalterung gemäß Figur 1 und Figur 2 kann mehrfach in einen Behälter 21 eingesetzt werden, der in Figur 3 dargestellt ist. Der Behälter 21 besitzt insgesamt sechs Aufnahmeräume 22, die jeweils eine Kassettenhalterung aufnehmen können. Die in Figur 3 dargestellte Magnetbandkassette 44 befindet sich in der Entnahmeposition, wie diese auch in Figur 1 dargestellt ist. Durch Einschieben der Magnetbandkassette 44 gelangt diese in die Aufbewahrungsposition, in der sich der Schieber 2 (Figur 2) mittels der Rasteinrichtung 17 (Figur 1) verriegelt. Durch ein erneutes, kurzes Drücken auf die Magnetbandkassette 44 wird die Rasteinrichtung 17 wieder entriegelt und die Magnetbandkassette 44 in die Entnahmeposition von der Feder 8 herausgeschoben.

Bei dem in Figur 1 und Figur 2 dargestellten Ausführungsbeispiel ist der Schieber 2 zusammen mit dem Klemmkeil 7 als einstückiges Kunststoffteil ausgebildet. Eine U-förmige Durchbrechung 23 umgibt den Klemmkeil 7, so daß dieser elastisch verschwenkbar ist.

## Patentansprüche

1. Kassettenhalterung mit Klemmeinrichtung, die einen auf einer Bodenplatte gegen die Federkraft einer Feder in eine Aufbewahrungsposition zurückschiebbaren Schieber hat, der eine Magnetbandkassette oder dergleichen Tonträger aufnimmt und der in der Aufbewahrungsposition verriegelbar ist, wobei eine Klemmeinrichtung die Magnetbandkassette in der Aufbewahrungsposition zur Vermeidung von Rüttelgeräuschen bei auftretenden Erschütterungen festklemmt, **dadurch gekennzeichnet**, daß die Feder (8) an einem am Schieber (2) angebrachten Betätigungselement (6) der Klemmeinrichtung angreift und das Betätigungselement (6) in der Aufbewahrungsposition gegen ein an der eingelegten Magnetbandkassette (4) seitlich anliegendes Klemmelement (7) drückt.

2. Kassettenhalterung nach Anspruch 1, **dadurch gekennzeichnet**, daß das Betätigungselement eine in Schieberichtung des Schiebers (2) verlaufende Schubstange (6) ist, die gegen einen quer am Schieber (2) angeordneten und gegen die Magnetbandkassette (4) verschwenkbaren, das Klemmelement bildenden Klemmkeil (7) verschiebbar ist.

3. Kassettenhalterung nach Anspruch 2, **dadurch gekennzeichnet**, daß der Klemmkeil (7) zusammen mit dem Schieber (2) ein einstückiges Kunststoffteil bildet und der Klemmkeil (7) von einer U-förmigen Durchbrechung umgeben ist.

4. Kassettenhalterung nach einem der vorhergehenden Ansprüche, **dadurch gekennzeichnet,** daß das Betätigungselement (6) in einem Längskanal (20) des Schiebers (2) geführt ist und an dessen Rückseite (14) mit einem Aufnahmeteil für die Feder (8) übersteht.

5. Kassettenhalterung nach einem der vorhergehenden Ansprüche, **dadurch gekennzeichnet,** daß als Feder (8) eine Torsionsfeder mit einem Federarm (9) rückseitig an der Kassettenhalterung und mit dem anderen Federarm (10) an dem Betätigungselement (6) angreift, wobei das freie Ende (13) des anderen Federarms (10) über das Betätigungselement (6) hinausragt und an der Rückseite (14) des Schiebers (2) anliegt.

6. Kassettenhalterung nach einem der vorhergehenden Ansprüche, **dadurch gekennzeichnet,** daß das Betätigungselement (6) in der Entnahmeposition des Schiebers (2) das Klemmelement (7) freigibt, so daß dieses sich in einer neutralen Position befindet.

## Claims

1. A cassette holder with clamping means, which has a slider that is arranged to be pushed back on a base plate into a storage position against the force of a spring, which slider receives a magnetic tape cassette or similar sound recording medium and which is arranged to be locked in the storage position, a clamping means clamping the magnetic tape cassette firmly in the storage position to avoid rattling noises when vibrations occur, characterized in that the spring (8) acts on an actuating element (6) of the clamping means mounted on the slider (2), and in the storage position the actuating element (6) presses against a clamping element (7) resting laterally against the inserted magnetic tape cassette (4).

2. A cassette holder according to claim 1, characterized in that the actuating element is a push rod (6) running in the direction of travel of the slider (2), which push rod is displaceable towards a wedge-shaped clamping member (7) forming the clamping element and arranged transversely on the slider (2) and pivotable towards the magnetic tape cassette (4).

3. A cassette holder according to claim 2, characterized in that the wedge-shaped clamping member (7), together with the slider (2), forms a one-piece plastics part and the wedge-shaped clamping member (7) is surrounded by a U-shaped aperture.

4. A cassette holder according to one of the preceding claims, characterized in that the actuating element (6) is guided in a longitudinal channel (20) of the slider (2) and projects at the rear side (14) thereof with a receiving part for the spring (8).

5. A cassette holder according to one of the preceding claims, characterized in that, as the spring (8), a torsion spring bears with one spring arm (9) on the rear side of the cassette holder and with its other spring arm (10) bears on the actuating element (6), the free end (13) of the other spring arm (10) projecting beyond the actuating element (6) and resting against the rear side (14) of the slider (2).

6. A cassette holder according to one of the preceding claims, characterized in that in the removal position of the slider (2) the actuating element (6) releases the clamping element (7) so that the latter is located in a neutral position.

## Revendications

1. Porte-cassette à dispositif de bridage comportant un tiroir que l'on peut faire coulisser sur une plaque de fond, à l'encontre d'une force de ressort, pour l'amener dans une position de rangement qui reçoit une cassette à bande magnétique ou un support acoustique analogue et qui peut se verrouiller dans la position de rangement, un dispositif de bridage bridant la cassette à bande magnétique dans la position de rangement pour éviter des bruits de vibrations lors des trépidations qui surviennent, caractérisé par le fait que le ressort (8) agit sur un élément de manoeuvre (6) rapporté sur le tiroir (2) du dispositif de bridage et que, dans la position de rangement, l'élément de manoeuvre (6) pousse contre un élément de bridage (7) qui appuie latéralement contre la cassette à bande magnétique insérée (4).

2. Porte-cassette selon la revendication 1, caractérisé par le fait que l'élément de manoeuvre est un buton (6) qui est orienté selon la direction du coulissement du tiroir (2) et qui peut coulisser pour venir contre un coin de bridage (7), formant l'élément de bridage, qui est disposé transversalement sur le tiroir (2) et qui peut pivoter pour venir contre la cassette à bande magnétique (4).

3. Porte-cassette selon la revendication 2, caractérisé par le fait que le coin de bridage (7) forme, avec le tiroir (2), une pièce en plastique monobloc et que le coin de bridage (7) est entouré par une découpure en forme de U.

4. Porte-cassette selon l'une des revendications précédentes, caractérisé par le fait que l'élément de manoeuvre (6) est guidé dans un canal longitudinal (20) du tiroir (2) et dépasse à l'arrière (14) du tiroir par un réceptacle pour le ressort (8).

5. Porte-cassette selon l'une des revendications précédentes, caractérisé par le fait que Comme ressort (8) c'est un ressort de torsion qui agit, par un bras (9), à l'arrière contre le porte-cassette et, par l'autre bras (10), contre l'élément de manoeuvre (6), l'extrémité libre (3) de l'autre bras (10) du ressort dépassant au-delà de l'élément de manoeuvre (6) et s'appuyant contre la face arrière (14) du tiroir (2).

6. Porte-cassette selon l'une des revendications précédentes, caractérisé par le fait qu'en position de saisie du tiroir (2), l'élément de manoeuvre (6) libère l'élément de bridage (7) de sorte que celui-ci se trouve dans une position neutre.
